# EUROPÄISCHE PATENTSCHRIFT

(11) **EP 0 657 061 B1**
(45) Veröffentlichungstag und Bekanntmachung des Hinweises auf die Patenterteilung: **27.06.2001**
(21) Anmeldenummer: 93918929.6
(22) Anmeldetag: 24.08.1993
(51) Int. Cl.: H01B 3/04, H01B 3/08, H01B 3/30

(54) **ISOLIERBAND FÜR EINE WICKLUNG EINER ELEKTRISCHEN MASCHINE**
INSULATING TAPE FOR THE WINDING OF AN ELECTRIC MACHINE
RUBAN ISOLANT POUR ENROULEMENT DE MACHINES ELECTRIQUES----------

(30) Priorität: 25.08.1992 EP 92250226
(43) Veröffentlichungstag der Anmeldung: 14.06.1995
(73) Patentinhaber: SIEMENS AKTIENGESELLSCHAFT, 80333 München (DE)
(72) Erfinder: SWIATKOWSKI, Gernot, D-13629 Berlin (DE); OLBRICH, Irene, D-13581 Berlin (DE)
(86) Internationale Anmeldenummer: DE9300790
(87) Internationale Veröffentlichungsnummer: WO9405018

(56) Entgegenhaltungen:
- EP-A- 0 012 566
- FR-A- 2 427 673
- US-A- 3 560 320
- US-A- 3 586 557

## Beschreibung

Die Erfindung liegt auf dem Gebiet der grundlegenden elektrischen Bauteile und ist bei der Herstellung von isolierten Leitern anzuwenden, wie sie in Form einer Wicklung für elektrische Maschinen größerer Leistung wie Motoren, Generatoren und Transformatoren verwendet werden.

Bei der Herstellung von Wicklungen für elektrische Maschinen wird zunächst ein Isolierband hergestellt, das aus einem Trägermaterial wie beispielsweise einem Glasgewebe, einem Kleber und einem elektrischen durchschlagsfesten Material wie Glimmer besteht; dabei wird zunächst der Kleber, der gegebenenfalls unter Verwendung eines Lösungsmittels in flüssiger Form vorliegt, entweder auf die Schicht aus dem Trägermaterial oder auf die Schicht aus dem elektrisch durchschlagsfesten Material oder auf beide Schichten aufgebracht, danach die beiden Schichten miteinander verbunden und anschließend die miteinander verbundenen Schichten einer Wärmebehandlung unterzogen. Zur Herstellung einer Wicklung wird das so hergestellte Isolierband um einen elektrischen Leiter gewickelt und anschließend mit einem Tränkharz getränkt; abschließend wird die imprägnierte Wicklung ausgehärtet. Die bei der Herstellung derartiger Wicklungen verwendeten Werkstoffe für das Trägermaterial, den Kleber und das Tränkharz hängen dabei von dem gewünschten Isoliervermögen und der gewünschten Wärmebeständigkeit der Isolierung ab. Es ist international üblich, die Wärmebeständigkeit gemäß der Norm IEC 85 in Klassen einzuteilen, so z.B. die Wärmeklasse F mit einer Grenztemperatur von 155 °C, die Wärmeklasse H mit einer Grenztemperatur von 180 °C und die Wärmeklasse C mit einer Grenztemperatur größer 180 °C ("Elektrische Isoliertechnik", Manfred Kahle, Springer-Verlag, 1989, Seite 201). Um Isolierungen der Wärmeklassen H und C herzustellen, ist es bekannt, als Trägermaterial ein Glasgewebe, als Kleber bzw. Bindemittel eine Lösung eines speziellen hochtemperaturfesten, hydroxylgruppenhaltigen Silikonharzes und als Tränkharz eine Mischung aus einem Epoxid-Harz und einem Isocyanat-Harz zu verwenden (EP 0 012 566 B1; DE 29 22 063 A1 / US 4,222,802 A). Durch die Verwendung eines speziellen Silikonharz-Klebers soll ein Delaminieren (das ist eine Verschlechterung der mechanischen und dielektrischen Eigenschaften der Wicklungsisolation durch mechanische Veränderungen sowie Ausgasen von Stoffen und Hohlraumbildung innerhalb der Isolation) der aus entsprechenden Isolierbändern hergestellten Wicklungsisolation verhindert werden.

An sich sind Isolierbänder bekannt, bei denen das Trägermaterial in Form eines Glasgewebes und das eigentliche Isoliermaterial in Form eines Glimmerbandes mittels eines als sehr dünne Folie (etwa 12 µ) ausgebildeten Klebers aus Polyäthylen miteinander verbunden sind und dieses Laminat mit einem Silikonharz behandelt ist. Dieses Isoliermaterial kann Temperaturen bis 180 °C standhalten (US 3,560,320 A). - Es ist weiterhin bekannt, zur Herstellung von laminatartigen Isolierbändern für die Verwendung in der Wärmeklasse H einen hochwärmebeständigen thermoplastischen Kleber aus Polyäthersulfon oder Polyätherimid zu verwenden, wobei dieser Kleber zum Aufbringen durch Aufsprühen in einem geeigneten Lösungsmittel gelöst wird (DE-U 89 05 612). - Um ein gegen hohe Temperaturen beständiges, stark dehnbares und verformbares Isoliermaterial zu schaffen, ist es weiterhin bekannt, eine Glimmerschicht mit einem Träger aus Polytetrafluoräthylen oder Terepthalsäureester mittels eines aushärtbaren Binders auf der Basis von Polyurethan, Epoxidharz, einer Polyterepthalsäureester-Lösung, Polytrafluoräthylen-Dispersionen oder Silikon zu verbinden (DE 1 273 647 B1). Es ist ferner bekannt, daß für Wicklungen elektrischer Maschinen verwendete Kleber bzw. Bindemittel auf der Basis thermoplastischer Kunststoff sich beim Betrieb der elektrischen Maschine erwärmen und erweichen, was zu einem Aufgehen der Isolation und einer Verschlechterung der dielektrischen Eigenschaften führen kann (CH 493 070 A).

Ausgehend von einem Verfahren mit den Merkmalen des Oberbegriffes des Patentanspruches 1 liegt der Erfindung die Aufgabe zugrunde, einen Kleber bereitzustellen, der kostengünstig und einfach zu verarbeiten und dennoch eine hochtemperaturbelastbare und gegen Delaminierung geschützte Wicklungsisolation ergibt. Der Kleber sollte dabei in konventionellen, physiologisch unbedenklichen Lösungsmitteln löslich sein, wobei eine gute Klebewirkung bei der späteren Betriebstemperatur der elektrischen Maschine nicht unbedingt erforderlich ist.

Zur Lösung dieser Aufgabe ist gemäß der Erfindung vorgesehen, daß als Kleber ein thermoplastischer Kleber aus einem Polyurethan oder einem gesättigten Polyester verwendet wird.

Ein gemäß der Erfindung verwendeter Kleber besteht im wesentlichen aus einem Stoff, dessen maximale Dauergebrauchstemperatur für sich mindestens eine Wärmeklasse unterhalb der oberen Grenztemperatur der Wärmeklasse der herzustellenden Wicklung liegt. Dieser Kleber kann aufgebracht werden, indem er in einem konventionellen Lösungsmittel gelöst und entweder auf das Band aus durchschlagfestem Material oder auf das Band aus einem Trägermaterial oder auf beide Bänder aufgesprüht wird. Die als Kleber verwendeten thermoplastischen Materialien sind relativ preiswert, da sie bezüglich der Dauergebrauchstemperatur keinen erhöhten Anforderungen genügen. Außerdem sind die Kleber über einen großen Zeitraum haltbar und flexibel, d.h. einfach verarbeitbar.

Nach dem Aufbringen des Isolierbandes auf einen elektrischen Leiter, dem Imprägnieren mit dem Harz und dem Aushärten hat die Wicklungsisolierung trotz der niedrigen Dauergebrauchstemperatur des Klebermaterials auch oberhalb dieser Temperatur die für die elektrische Maschine geforderte elektrische und mechanische Festigkeit.

Der gemäß der Erfindung verwendete Kleber kann vor dem Aufbringen auf das Trägermaterial oder auf das elektrische durchschlagfeste Material mit einem Beschleuniger vermischt werden. Ein solcher Beschleuniger sorgt dafür, daß das Imprägnierharz, mit dem das Isolierband nach dem Aufbringen auf die Wicklung imprägniert wird, im Bereich des Isolierbandes selbst schnell ausgehärtet wird. Durch das gemeinsame Aufbringen des Beschleunigers mit dem Kleber wird ein zusätzlicher Verfahrensschritt zum Aufbringen des Beschleunigers eingespart. - Der Beschleuniger kann aber auch unabhängig vom Kleber auf das Isolierband aufgebracht werden. Dies ist dann angezeigt, wenn der Beschleuniger für sich unabhängig vom Kleber dosierbar sein soll.

Als Beschleuniger kommen insbesondere tertiäre Amine, Imidazole, quartäre Amoniumsalze, Lewissäuren, Lewisbasen, Phosphoniumsalze, Piperazine, metallorganische Verbindungen oder eine Mischung von mehreren dieser Stoffe in Betracht.

Anhand von Untersuchungsergebnissen an nach der Erfindung hergestellten Isolierschichten werden die Vorteile der Erfindung näher erläutert:

Aus Glimmer, Glasseide und einem thermoplastischen Polyurethankleber (Desmocoll 176 der Firma Bayer) werden mittels einer Kaschiermaschine Glimmerbänder hergestellt. Dabei wird der Kleber als Lösung auf das Glimmerpapier aufgebracht und dieses anschließend mit der Glasseide zusammengeführt. Eingesetzt wurde eine Lösung mit 13 Gew.% des Polyurethanklebers in Methylethylketon. Der Klebeauftrag beträgt ca. 12 g/m². Für die Teilleiterisolierung wird ein Phlogopit-Glimmer mit einem Flächengewicht von 90 g/m², für die Hauptisolierung ein Muskovitglimmer mit einem Flächengewicht von 160 g/m² verwendet.

Ermittlung des Gewichtsverlustes von imprägnierten Glimmerbandlaminaten:

Der Gewichtsverlust wird an Glimmerbandlaminaten ermittelt, die nach Vakuumimprägnierunstechnik mit einem Isocyanat/Epoxid-Tränkharz bei 80 °C imprägniert wurden. Dazu wird 24 mm breites Glimmerband mit Beschleuniger BCL₃DMBA (Konzentration 0,5 g/m") beschichtet und mittels des Polyurethanklebers Desmocoll 176 der Firma Bayer mit einem Glasseidengewebe verklebt. Es werden Probekörper aus 12 Lagen Glimmerband mit einer Länge von 16 cm hergestellt.

Die imprägnierten Laminate werden über 64 Wochen unter Stickstoff bei 180, 200 und 220 °C gelagert.

Es wurden folgende Gewichtsverluste, bezogen auf den Tränkharz/Klebharzanteil ermittelt (in Gewichtsprozent):

| Lagerungstemp. | 1 Wo. | 4 Wo. | 16 Wo. | 32 Wo. |
|---|---|---|---|---|
| 180 °C | 0,08 | 0,14 | 0,31 | 0,64 |
| 200 °C | 0,15 | 0,35 | 1,30 | 2,04 |
| 220 °C | 0,53 | 1,55 | 3,47 | 5,52 |

Bei Lagertemperaturen von 180 bzw. 200 °C hielt sich der Gewichtsverlust in vertretbaren Grenzen. Ein höherer Gewichtsverlust wäre ein Zeichen dafür, daß sich der Kleber bei hohen Temperaturen zersetzt und ausgast. Diese Zersetzung würde zu Blasen- und Hohlraumbildung und damit verbunden zu einer Verschlechterung der dielektrischen und mechanischen Eigenschaften (Delaminieren) einer mit dem Kleber hergestellten Wicklungsisolation führen.

Das Laminat bleibt außerdem mechanisch stabil und weist in diesem Temperaturbereich die für den Einsatz als Isolierung notwendigen mechanischen und elektrischen Stabilitätseigenschaften auf. Damit ist der Polyurethankleber Desmocoll 176 für Wicklungen der Wärmeklasse H einsetzbar, obwohl er selbst eine maximale Dauergebrauchstemperatur von nur etwa 90 °C aufweist.

In einer weiteren Versuchsreihe wurde das Temperaturververhalten von Laminatproben, die mit einem Thermoplastbandkleber (einem gesättigten Polyester) hergestellt wurden, mit dem Temperaturverhalten solcher Lamiatproben verglichen, die mit einem Silikonbandkleber hergestellt wurden.

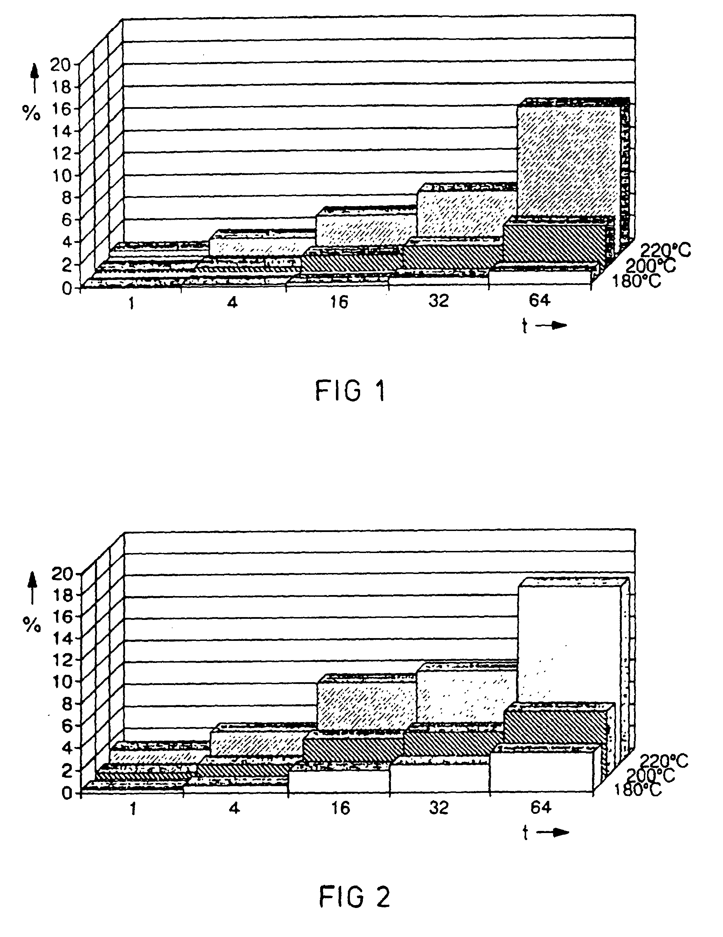

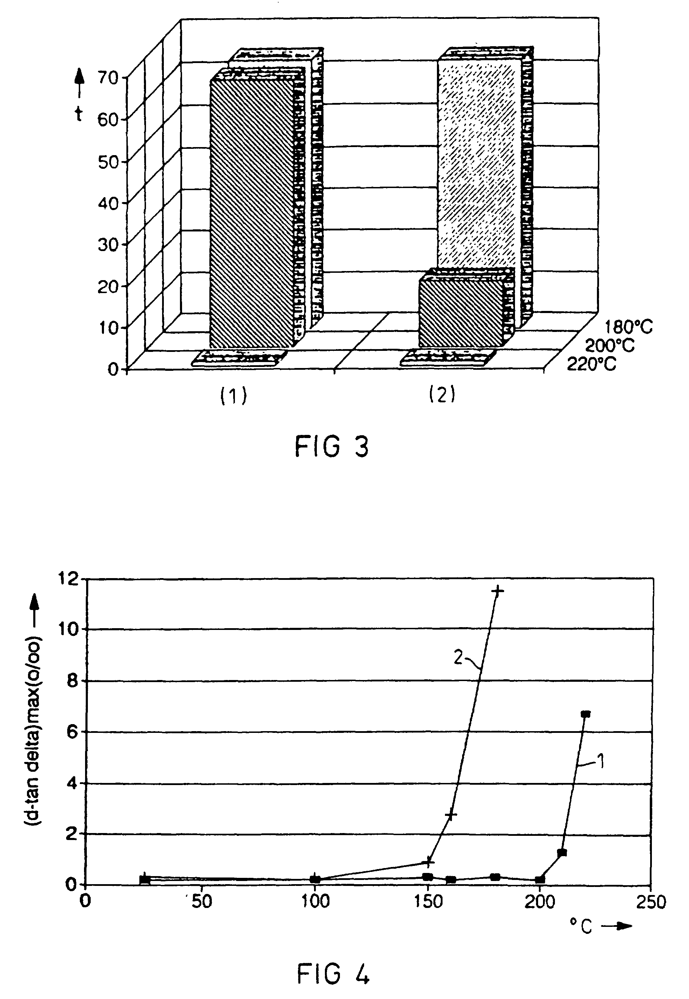

In den Figuren 1 bis 4 sind entsprechende Versuchsergebnisse dargestellt, die nachfolgend erläutert werden. Die Tabellen 1 bis 3 enthalten die in den Diagrammen der Figuren 1 bis 4 aufgetragenen Werte in tabellarischer Form und zwar die Tabelle 1 die Werte der Figuren 1 und 2, die Tabelle 2 die Werte der Figur 3 und Tabelle 3 die Werte der Figur 4.

In Figur 1 ist für einen Thermoplastbandkleber (1), und zwar einen gesättigten Polyester (oberste Dauergebrauchstemperatur etwa 100 °C) der Gewichtsverlust der entsprechenden Laminatproben in Prozent auf der Ordinate gegen die Lagerzeit bei Lagerung von 1 bis 64 Wochen in einer Stickstoff-Atmosphäre für drei verschiedene Temperaturen, 180 °C, 200 °C und 220 °C aufgetragen. Es zeigt sich, daß der Gewichtsverlust bei einer Lagerung bei 200 °C auch nach 64 Wochen noch vertretbar ist.

Dagegen tritt bei einer Lagerung bei 220 °C ein zu hoher Gewichtsverlust auf, der eine Delaminierung der Laminatproben anzeigt.

Im Vergleich dazu ergibt ein Silikonbandkleber (2) (DOW 994 der Firma DOW Chemical) in den entsprechenden Laminaten jeweils höhere Gewichtsverluste (Tabelle 1, Figur 2) und bereits bei 200 °C werden die Gewichtsverluste so groß, daß eine Delaminierung der entsprechenden Laminate angenommen wird (vgl. Fig. 2, Tabelle 1).

Entsprechend ist in Tabelle 2 und Figur 3 eingetragen, über wieviele Wochen die unter Verwendung des Thermoplastbandklebers (1) hergestellten Laminate bei den verschiedenen Temperaturen stabil sind. In Figur 3 ist auf der Ordinate die Zeit in Wochen aufgetragen. Es ergibt sich, daß bei einer Versuchszeit von 64 Wochen die bei 180 °C und 200 °C gelagerten Proben bis über das Ende der Versuchszeit hinaus stabil sind.

Bei den mit dem Silikonbandkleber (2) hergestellten Laminaten sind gemäß Figur 3 lediglich die bei 180 °C gelagerten Laminate über 64 Wochen stabil. Die bei 200 °C gelagerten Laminate genügen schon nach 16 Wochen nicht mehr den an sie gestellten Anforderungen.

Die in den Tabellen des Anhangs dargestellten Meßwerte entsprechen den in den entsprechenden Figuren in Form von Diagrammen dargestellten Werten.

Als ein weiteres verläßliches Verfahren zur Beurteilung der Delaminierung einer Wicklungsisolation hat sich die Messung des dielektrischen Verlustfaktors tan δ herausgestellt.

Besonders aussagekräftige Ergebnisse liefert dabei folgende Vorgehensweise:
Verschiedene Laminate werden bei unterschiedlichen, für jedes Laminat zeitlich konstanten Temperaturen über einen bestimmten, für alle Laminate gleichen Zeitraum (typisch einige Wochen) gelagert. Daraufhin wird für jedes Laminat der tan gemäß VDE-Norm 530 Teil I bei verschiedenen elektrischen Spannungen zwischen dem 0,2-fachen und dem 1,4-fachen der Nennspannung der herzustellenden Wicklungsisolation in Schritten gemessen, deren Schrittweite dem 0,2-fachen der Nennspannung entspricht. Danach wird die Differenz der tan -Werte jeweils zwischen zwei benachbarten, auf diese Weise gewonnenen Meßpunkten eines Laminats bestimmt. Die maximale, bei diesem Verfahren für ein Laminat aufgefundene Differenz des tan -Wertes zweier Nachbarpunkte wird mit Δtanδ (max) dieses Laminates bezeichnet.

Für jedes der bei unterschiedlichen Temperaturen gelagerten Laminate wird auf diese Weise ein Δtanδ (max)-Wert bestimmt.

Die Werte werden in einem Diagramm gegen die Lagertemperatur der entsprechenden Laminate aufgetragen. Es ergibt sich typischerweise eine Kurve, bei der die Δtanδ (max)-Werte, die auf der Ordinate abgetragen sind, mit steigender Lagertemperatur zuerst schwach, dann stärker ansteigen. Typischerweise läßt sich ein enger Temperaturbereich bestimmen, in dem ein sehr starker Anstieg des Δtanδ (max)-Wertes stattfindet. Es hat sich herausgestellt, daß dieses Verhalten des tan Δ(max)δein Zeichen für eine Delaminierung des Laminats in dem genannten Temperaturbereich darstellt.

Im folgenden werden zwei Beispiele für das Verhalten von Laminaten angegeben, wobei das erste Beispiel ein Laminat aus einem Isolierband betrifft, bei dem als Kleber ein gesättigter Polyester ("Thermoplastbandkleber") und als Tränkharz ein Epoxid-Isocyanat-System verwendet wurde (vgl. Anlage Fig. 4, Tabelle 3).

Es ergibt sich, daß der starke Anstieg des Δtanδ (max)-Wertes erst oberhalb einer Temperatur von 200 °C einsetzt. In Figur 4 ist der Wert in Promille auf der Ordinate gegen die Temperatur in °C auf der Abszisse aufgetragen. Dabei wurde der Wert für eine Nennspannung der Isolierung von U_{N} = 11 kV bei einer Isolierdicke von 1,95 mm bestimmt.

Dies bedeutet, daß das mit dem gesättigten Polyester als Kleber hergestellte Isolierband dauernd Temperaturen bis zu 200 °C ausgesetzt werden kann, ohne daß die Wicklung delaminiert. Dieses Isolierband ist somit für elektrische Maschinen der Wärmeklasse C (> 180 °C) einsetzbar, obwohl der Kleber sich aller Erwartung nach oberhalb von ca. 100 °C zersetzen sollte.

Das zweite Beispiel bezieht sich auf den Silikonharzkleber (DOW 994), der unter gleichen Bedingungen wie der genannte Polyester in einem Laminat als Kleber verarbeitet wurde. Dieser Stoff ist für sich bis etwa 220 °C stabil. Dennoch ergibt sich, daß der Δtanδ (max)-Wert bereits bei 150 °C stark ansteigt, was eine Delaminierung bereits in diesem Temperaturbereich anzeigt (vgl. Figur 4, Tabelle 3).

**Tabelle 1**

| **Gewichtsverlust von Laminatproben in %** | | | | | | |
|---|---|---|---|---|---|---|
| **Thermoplastbandkleber** | | | | **Silikonbandkleber** | | |
| | 180°C | 200°C | 220°C | 180°C | 200°C | 220°C |
| 1 Woche | 0,06 | 0,12 | 0,45 | 0,31 | 0,48 | 1,27 |
| 4 Wochen | 0,11 | 0,28 | 1,42 | 0,61 | 1,19 | 2,84 |
| 16 Wochen | 0,30 | 1,15 | 3,35 | 1,91 | 3,46 | 7,26 |
| 32 Wochen | 0,61 | 1,95 | 5,41 | 2,39 | 4,04 | 8,27 |
| 64 Wochen | 1,16 | 3,79 | 12,89 | 3,47 | 5,86 | 16,0 |
| Die Gewichtsverluste beziehen sich auf den Tränkharz/Klebharz-Anteil in den Laminatproben. Die Lagerung erfolgte unter Stickstoff-Atmosphäre. | | | | | | |

**Tabelle 2**

| **Aufgehverhalten von Laminatproben** | | | | | | |
|---|---|---|---|---|---|---|
| **Thermoplastbandkleber** | | | | **Silikonbandkleber** | | |
| | 180°C | 200°C | 220°C | 180°C | 200°C | 220°C |
| Proben stabil | 64 | 64 | 1 | 64 | 16 | 1 Wochen |

**Tabelle 3**

| **Thermisch-mechanische Festigkeit der Hauptisolierung** | | |
|---|---|---|
| **Thermoplastbandkleber** | | **Silikonbandkleber** |
| Messung nach Lagerung 16 Std. bei | | (d-tan delta)max(o/oo) |
| 25°C | 0,2 | 0,3 |
| 100°C | 0,2 | 0,2 |
| 150°C | 0,3 | 0,9 |
| 160°C | 0,2 | 2,8 |
| 180°C | 0,3 | 11,5 |
| 200°C | 0,2 | ----- |
| 210°C | 1,3 | ----- |
| 220°C | 6,7 | ----- |
| Hauptisolierung für UN= 11kV | | |
| Isolierdicke: 1,95mm | | |

## Patentansprüche

1. Verfahren zur Herstellung einer Wicklung der Wärmebeständigkeitsklasse H oder C nach IEC 85 für eine elektrische Maschine,
bei dem zunächst ein Isolierband hergestellt wird, das aus einem Trägermaterial in Form von Glasseide, einem Kleber und einem elektrisch durchschlagfesten Material wie Glimmer besteht,
wobei zunächst der unter Verwendung eines Lösungsmittels in flüssiger Form vorliegende Kleber entweder auf eine Schicht aus dem Trägermaterial oder auf die Schicht aus dem elektrisch durchschlagfesten Material oder auf beide Schichten aufgebracht, die beiden Schichten miteinander verbunden und anschließend die miteinander verbundenen Schichten einer Wärmebehandlung unterzogen werden,
bei dem das so hergestellte Isolierband um einen elektrischen Leiter gewickelt und anschließend mit einem Tränkharz getränkt wird, das aus einer Mischung aus einem Epoxid-Harz und einem Isocyanat-Harz besteht,
und bei dem die imprägnierte Wicklung ausgehärtet wird,
**dadurch gekennzeichnet,**
daß als Kleber ein thermoplastischer Kleber aus einem Polyurethan oder einem gesättigten Polyester verwendet wird.

2. Verfahren nach Anspruch 1,
**dadurch gekennzeichnet,**
daß der Kleber vor dem Aufbringen auf die Schicht aus einem Trägermaterial oder auf die Schicht aus einem elektrisch durchschlagfesten Material mit einem Beschleuniger vermischt wird.

3. Verfahren nach Anspruch 1,
**dadurch gekennzeichnet,**
daß ein Beschleuniger getrennt vom Kleber auf das Isolierband aufgebracht wird.

4. Verfahren nach Anspruch 2 und 3,
**dadurch gekennzeichnet**,
daß als Beschleuniger tertiäre Amine, Imidazole, quartäre Ammoniumsalze, Lewissäuren, Lewisbasen, Phosphoniumsalze, Piperazine, metallorganische Verbindungen oder eine Mischung mehrerer dieser Stoffe verwendet werden.

## Claims

1. A process for producing a winding of the heat resistance class H or C according to IEC 85 for an electric machine,
in which firstly an insulating tape is produced, which consists of a backing material in the form of glass silk, an adhesive and an electric breakdown-resistant material such as mica,
wherein the adhesive, which is present in liquid form using a solvent, is firstly applied either to a layer of backing material or the layer of electric breakdown-resistant material or to both layers, the two layers are connected together and the connected layers are then subjected to heat treatment,
in which the insulating tape produced in this way is wound round an electric conductor and then impregnated with an impregnating resin, which consists of a mixture of an epoxy resin and an isocyanate resin,
and in which the impregnated winding is cured,
characterised in that
a thermoplastic adhesive of a polyurethane or a saturated polyester is used as the adhesive.

2. A process according to claim 1,
characterised in that
the adhesive is mixed with an accelerating agent prior to application to the layer of backing material or to the layer of electric breakdown-resistant material.

3. A process according to claim 1,
characterised in that
an accelerating agent is applied to the insulating tape separately from the adhesive.

4. A process according to claim 2 and claim 3,
characterised in that
tertiary amines, imidazoles, quaternary ammonium salts, Lewis acids, Lewis bases, phosphonium salts, piperazines, organometallic compounds or a mixture of two or more of these substances are used as accelerating agent.

## Revendications

1. Procédé de fabrication d'un enroulement de la classe H ou C d'isolement suivant IEC 85 pour une machine électrique,
dans lequel on produit d'abord un ruban isolant qui est constitué d'un matériau de base sous la forme de soie de verre, d'une colle et d'un matériau résistant au claquage électrique comme du mica,
la colle se trouvant sous forme liquide du fait de l'utilisation d'un solvant étant déposée sur une couche en le matériau de base ou sur la couche en le matériau résistant au claquage électrique ou sur les deux couches, les deux couches étant reliées l'une à l'autre et les deux couches reliées l'une à l'autre étant soumises ensuite à un traitement thermique,
dans lequel on enroule le ruban isolant ainsi produit autour d'un conducteur électrique et on l'imprègne ensuite d'une résine d'imprégnation qui est constituée d'un mélange d'une résine époxy et d'une résine d'isocyanate,
et dans lequel on durcit l'enroulement imprégné,
caractérisé en ce que l'on utilise comme colle une colle thermoplastique en un polyuréthanne ou en un polyester saturé.

2. Procédé suivant la revendication 1, caractérisé en ce que l'on mélange la colle à un accélérateur avant le dépôt sur la couche en un matériau de base ou sur la couche en un matériau résistant au claquage électrique.

3. Procédé suivant la revendication 1, caractérisé en ce que l'on dépose un accélérateur séparément de la colle sur le ruban isolant.

4. Procédé suivant la revendication 2 et 3, caractérisé en ce que l'on utilise comme accélérateurs des amines tertiaires, des imidazoles, des sels d'ammonium quaternaires, des acides de Lewis, des bases de Lewis, des sels de phosphonium, des pipérazines, des composés organométalliques ou un mélange de plusieurs de ces substances.
